(19) Europäisches Patentamt
European Patent Office
Office européen des brevets

(11) EP 3 337 298 A1

(12) EUROPEAN PATENT APPLICATION

(43) Date of publication:
20.06.2018 Bulletin 2018/25

(51) Int Cl.:
H05B 37/02 (2006.01)      G09G 5/00 (2006.01)

(21) Application number: 17202106.5

(22) Date of filing: 16.11.2017

(84) Designated Contracting States:
AL AT BE BG CH CY CZ DE DK EE ES FI FR GB GR HR HU IE IS IT LI LT LU LV MC MK MT NL NO PL PT RO RS SE SI SK SM TR
Designated Extension States:
BA ME
Designated Validation States:
MA MD

(30) Priority: 15.12.2016 EP 16306683

(71) Applicant: THOMSON LICENSING
92130 Issy les Moulineaux (FR)

(72) Inventors:
• ABELARD, Franck
  35576 Cesson-Sévigné (FR)
• GILBERTON, Philippe
  35576 Cesson-Sévigné (FR)
• ERIKSSON, Brian Charles
  San Jose, CA 95124 (US)

(74) Representative: Huchet, Anne
TECHNICOLOR
1-5, rue Jeanne d'Arc
92130 Issy-les-Moulineaux (FR)

(54) **APPARATUS AND METHOD FOR CONTROLLING LIGHTING CONDITIONS IN A ROOM**

(57)   A device and a method for controlling lighting conditions of a room. The room comprises at least one adjustable element that impacts the lighting conditions of the room. One example of adjustable element is a remote controllable shutter (161, 162) being associated with a window (261, 262), the shutter being remotely controllable for adjusting the amount of natural light entering the window. Another example is a lamp or lighting equipment (151, 152) being remotely controllable for adjusting the amount of artificial light that is emitted. A multidirectional light sensor (120) comprises a plurality of light sensors arranged to capture the light intensity from a plurality of directions. The device (100) obtains measures from the multidirectional light sensor and adjusts the lighting conditions of the room. When the light in direction of the screen is higher than a first threshold, the device decreases the lighting conditions by sending a command to the adjustable element located in opposite direction to the screen. When the average value of light is lower than a second threshold, the device increases the lighting conditions by sending a command to at least one adjustable element of the room.

Figure 4A

**Description**

TECHNICAL FIELD

The present disclosure relates to the domain of lighting and more precisely describes an apparatus and a method for controlling the lighting conditions in a room, particularly when the room comprises a screen displaying images or videos.

BACKGROUND

This section is intended to introduce the reader to various aspects of art, which may be related to various aspects of the present disclosure that are described and/or claimed below. This discussion is believed to be helpful in providing the reader with background information to facilitate a better understanding of the various aspects of the present disclosure. Accordingly, it should be understood that these statements are to be read in this light, and not as admissions of prior art.

Lighting conditions can impact greatly the quality of experience in a home, particularly while some programs are watched on a screen. Bad lighting conditions can ruin the experience. This is particularly true when external lighting induces perturbations inside a viewing room and for example reaches a screen that is displaying images. These perturbations also include light reflection on walls, floor, ceiling and furniture. One solution in such situation requires the user to close manually the shutters or curtains in order to block external light. Perturbations may also be generated inside the room by artificial lighting. In this case, the user must switch the lamps off to suppress the perturbation.

Multiple techniques have been experimented in the domain of dynamic ambient lighting with the goal of controlling automatically the lighting conditions of a room to facilitate the user's life. A common technique is to use a light sensor to sense the overall lighting conditions of the room and control some lighting equipment to conform the lighting conditions into an acceptable range by increasing the intensity of lights. These proposals are not able to adapt when a light beam comes through a window and shines onto the screen, preventing the viewer to see the images. An automated system controlling shutters or curtains does not solve the problem either since only the closing of the appropriate shutter or curtain, i.e. the one receiving the light beam, will reduce the incoming light. A possible solution would be to install multiple light sensors at different places in the room to sense the different lighting directions but would be cumbersome on an installation point of view.

It can therefore be appreciated that there is a need for a solution for controlling the lighting conditions in a room that addresses at least some of the problems of the prior art. The present disclosure provides such a solution.

SUMMARY

The present disclosure describes device and a method for controlling lighting conditions of a room. The room comprises at least one adjustable element that impacts the lighting conditions of the room. One example of adjustable element is a remote controllable shutter being associated with a window, the shutter being remotely controllable for adjusting the amount of natural light entering the window. Another example is a lamp or lighting equipment being remotely controllable for adjusting the amount of artificial light that is emitted. A multidirectional light sensor comprises a plurality of light sensors arranged to capture the light intensity from a plurality of directions. The device obtains measures from the multidirectional light sensor and adjusts the lighting conditions of the room. When the light in direction of the screen is higher than a first threshold, the device decreases the lighting conditions by sending a command to the adjustable element located in opposite direction to the screen. When the average value of light is lower than a second threshold, the device increases the lighting conditions by sending a command to at least one adjustable element of the room.

In a first aspect, the disclosure is directed to a device for controlling lighting conditions of a room, the room comprising a screen to display an image and at least one adjustable element whose adjustment impacts the lighting conditions of the room, the device comprising: a multidirectional light sensor comprising a plurality of light sensors arranged in order that each light sensor measures a light intensity from a direction among a plurality of directions; a network interface adapted to control lighting conditions of the room by sending commands to the at least one adjustable element; a memory configured to store at least an impact table determining, for each adjustable element, an impact value representing the impact of the adjustable element on the lighting conditions for each one of the plurality of directions; a processor configured to obtain a direction of the screen, obtain light intensity measurement in a plurality of directions, when the light intensity measured in the direction opposite to the direction towards the screen meets a criterion, select an adjustable element to be adjusted, based on the lighting conditions and the impact table and reduce the lighting conditions of the room by sending a command to adjust the selected adjustable element. In a variant of first aspect, the criterion is met when the light intensity measured in a direction opposite to the direction towards the screen is higher than a threshold.

In a first embodiment of the first aspect, the processor is further configured to generate the impact table by learning the directions of the screen and directions impacted by the adjustable elements. In a second embodiment of the first aspect, the processor is further configured to learn the direction of the screen by performing successive light measurements from the plurality of directions while the screen displays animated images, determine for each direction the difference between minimal and maximal values measured and select the direction with highest difference as being the direction of the screen. In a third embodiment of first aspects, the processor is further configured to learn the direction of the adjustable elements by performing a first light measurement from the plurality of directions with the adjustable element in a first position and a second measurement from the plurality of directions with the adjustable element in a second position, determine for each direction the difference between both measures, determine for each direction the percentage of the cumulated differences and store the value in the impact table. In a fourth embodiment of first aspect, when the average value of light is lower than a second threshold, the processor is further configured to select an adjustable element to be adjusted based on the impact table and the lighting conditions and to increase the lighting conditions of the room by sending at least a command to the selected adjustable element. In a fifth embodiment of the first aspect, the device is a light bulb. In a sixth embodiment of the first aspect, the device is a voice-controlled home assistant device. In a seventh embodiment of the first aspect, the device is a screen and one of the light sensor is realized by a camera integrated in the screen, the camera capturing images that are analysed by image processing algorithms to determine the lighting measurements.

In a second aspect, the disclosure is directed to a method for controlling lighting conditions of a room, the room comprising a screen to display an image and at least one adjustable element whose adjustment impacts the lighting conditions of the room, the method comprising: measuring light intensity in a plurality of directions, when the light intensity measured in the direction opposite to the direction towards the screen is higher than a first threshold, selecting an adjustable element to be adjusted based on the lighting conditions and an impact table determining, for each adjustable element, an impact value representing the impact of the adjustable element on the lighting conditions for each one of the plurality of directions, and reducing the lighting conditions of the room by sending a command to adjust the selected adjustable element.

In a first embodiment of the second aspect, the impact table is generated by learning the directions of the screen and directions impacted by the adjustable elements. In a second embodiment of the second aspect, the direction of the screen is learnt by performing successive light measurements from the plurality of directions while the screen displays animated images, determine for each direction the difference between minimal and maximal values measured and select the direction with highest difference as being the direction of the screen. In a third embodiment of the second aspect, the direction of the adjustable elements is learnt by performing a first light measurement from the plurality of directions with the adjustable element in a first position and a second measurement from the plurality of directions with the adjustable element in a second position, determine for each direction the difference between both measures, determine for each direction the percentage of the cumulated differences and store the value in the impact table. In a fourth embodiment of the second aspect, when the average value of light is lower than a second threshold, an adjustable element is selected, based on the impact table and the lighting conditions, and the lighting conditions of the room are increased by sending at least a command to the selected adjustable element.

In a third aspect, the disclosure is directed to a computer program comprising program code instructions executable by a processor for implementing any embodiment of the method of the first aspect.

In a fourth aspect, the disclosure is directed to a computer program product which is stored on a non-transitory computer readable medium and comprises program code instructions executable by a processor for implementing any embodiment of the method of the first aspect.

BRIEF DESCRIPTION OF DRAWINGS

Preferred features of the present disclosure will now be described, by way of non-limiting example, with reference to the accompanying drawings, in which

Figure 1 illustrates an exemplary apparatus of a light control device in which the disclosure may be implemented, showing an example of interconnection with other devices;
Figure 2 illustrates an exemplary setup of a household room according to an embodiment of the disclosure in a top view of the room;
Figure 3A illustrates an exemplary setup of a multi directional light sensor according to an embodiment of the disclosure where four unitary light sensors are used;
Figure 3B illustrates an exemplary setup of a light bulb integrating a multi directional light sensor using four unitary light sensors according to an embodiment of the disclosure. ;
Figure 3C illustrates an exemplary setup of a screen device integrating a multi directional light sensor using four unitary light sensors according to an embodiment of the disclosure.

Figure 3D illustrates an exemplary setup of a voice controlled home assistant device integrating a multi directional light sensor using four unitary light sensors according to an embodiment of the disclosure;
Figure 4A represents a sequence diagram describing steps to implement a method of the disclosure for controlling the lighting conditions in a room;
Figure 4B represents a sequence diagram describing steps to implement a method of the disclosure for learning the directions of the screen and adjustable elements of the room;
Figure 4C represents a sequence diagram describing steps to implement a method to reduce the lighting conditions in a room by adjusting at least one adjustable element;
Figure 4D represents a sequence diagram describing steps to implement a method to increase the lighting conditions in a room by adjusting at least one adjustable element.

DESCRIPTION OF EMBODIMENTS

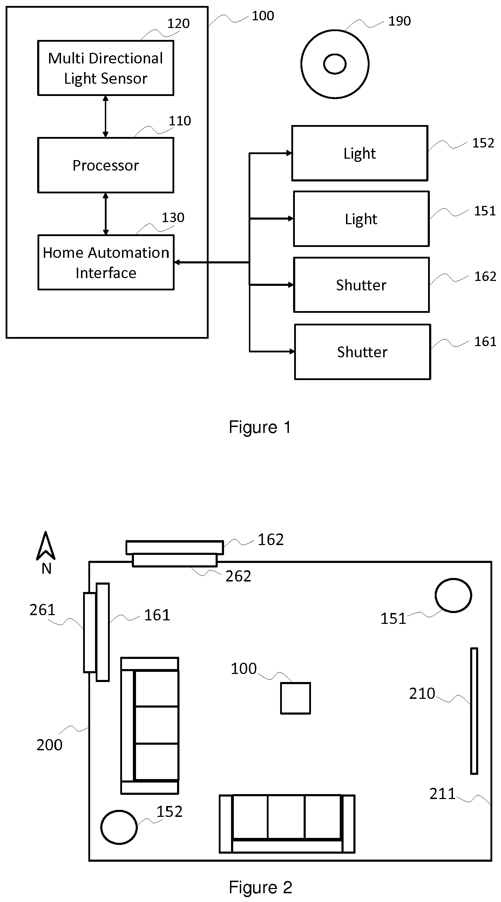

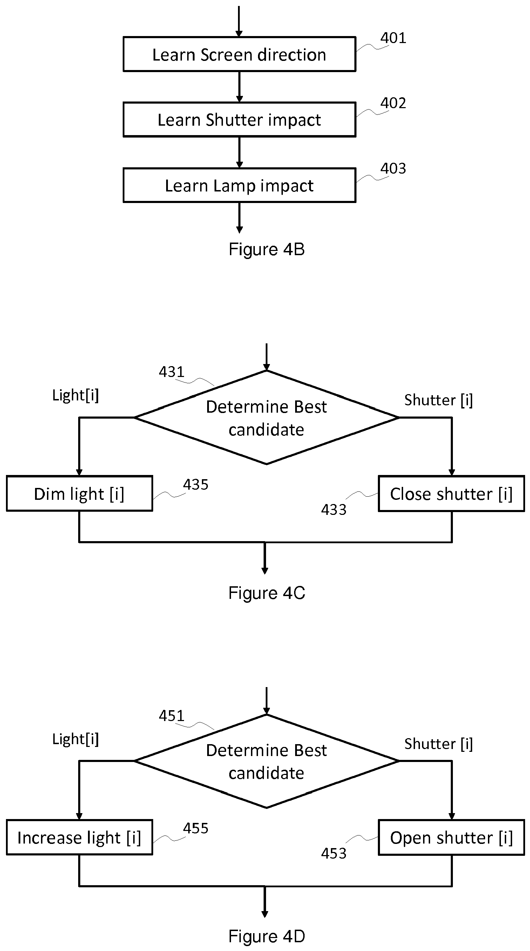

**Figure 1** illustrates an exemplary apparatus of a light control device 100 in which the disclosure may be implemented, showing an example of interconnection with other devices. The skilled person will appreciate that the illustrated device is very simplified for reasons of clarity. According to a specific and non-limiting embodiment of the principles, the light control device 100 comprises at least a processor 110 configured to execute a method of at least one embodiment of the present disclosure, a multidirectional light sensor 120 configured to sense lighting conditions according to a plurality of directions and a home automation interface 130 configured to interact with other devices comprising adjustable elements that impact the lighting conditions of the room. The device conventionally comprise memory 140 (not depicted in figure 1) to store at least measurements performed during the lighting control operation and an impact table described below in the description of figure 4B. A non-transitory computer readable storage medium 190 stores computer readable program code that is executable by the processor 110 to perform at least one of the methods described herein.

Communication interfaces using X10, ZigBee or Z-Wave constitute examples of the home automation interface 130 used to control the adjustable elements that impact the lighting conditions of the room. Other network interfaces may be used. These interfaces are conventionally complemented by higher level protocols such as those proposed by the AllSeen Alliance or the Open Interconnect Consortium to achieve interoperability between devices from different providers. Conventionally, a discovery phase allows each device of a household to discover the other devices of the household, each device announcing its presence along with some information such as a device type or capabilities information. After this discovery, a first device is able to control a second device by sending commands, according to its type or capabilities, and is able to know the state of a device by querying status information.

In the exemplary setup illustrated by figure 1, the light control device 100 is connected to lamps 151, 152 and shutters 161, 162 through the home automation interface 130. Using the appropriate interoperability protocol and after a discovery phase, the light control device 100 is able to list the adjustable elements that impact the lighting conditions of the room comprising the shutters and lamps of the room, to read the position of the shutters, the state of the lamps, to close or open the shutters, completely or partially, and to turn the lamps on or off or to dim the lamps.

The light control device can be a standalone device, for example fixed on the ceiling of the room or on a furniture but can also be integrated into another device such as a light bulb or an electronic device (set top box, television, home automation controller, voice controlled home assistant devices, etc.).

**Figure 2** illustrates an exemplary setup of a household room according to an embodiment of the disclosure in a top view of the room. The room 200 is equipped with a light control device 100, lamps 151, 152, a window 261 equipped with an interior shutter 161, a window 262 equipped with an exterior shutter 162 and a screen 210 displaying fixed or animated images. A television or a projection screen receiving images from a projector are example of screens. The control device 100 is here integrated into a light bulb fixed to the ceiling in the centre of the room. In this example, the lamps 151, 152 and shutters 161, 162 are the adjustable elements that impact the lighting conditions of the room.

In such setup, when the sun shines from the west through the window 261, the image displayed on the screen 210 is not perceived correctly. Indeed, the solar light beam projects directly onto the screen 210 and the wall 211 behind the screen. In both cases, the user experience of the viewer is not satisfactory since this bright lighting prevents the user from seeing colour and brightness variations of the image displayed on the screen 210. In this situation, the light control device 100 detects that the intensity of light in the direction of the screen 210 is too high and therefore, through the home automation interface 130, requests the shutter 161 to close. In another situation where the sun shines from the north through the window 262, the beam does not interfere with the image displayed on the screen 210 that is still perceived correctly so that it is not necessary to close the shutter 162. In another situation the lamp 152 is lit and induces a perturbation on the screen, independently from any external lighting. In this case, the light control device 100 first detects that the lamp 152 is lit and turns it off before trying to operate the shutters. The decision of which adjustable element to be controlled, for example a lamp or a shutter, is taken by the light control device 100 according to the light measured from a plurality of directions and in relation to the position of the screen 210 within the room. Control of multiple adjustable element may be necessary to reach satisfying lighting conditions.

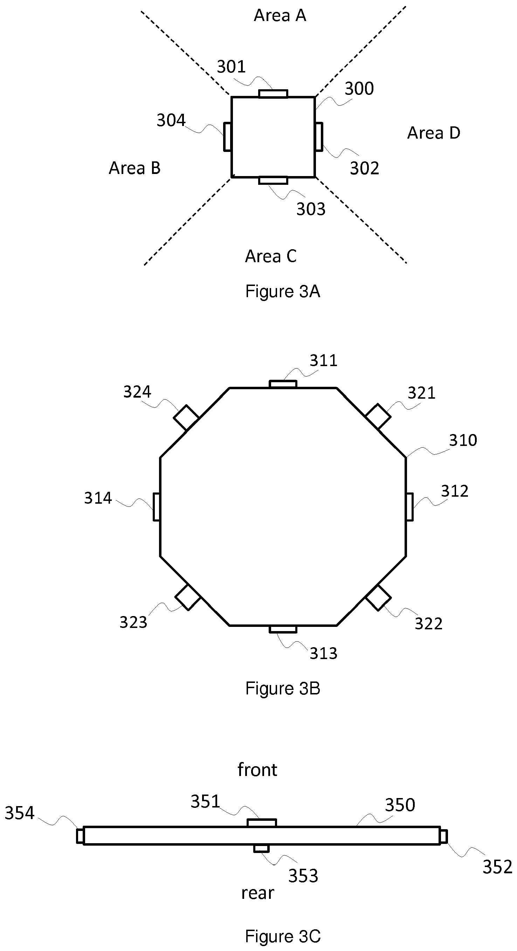

**Figure 3A** illustrates an exemplary setup of a multi directional light sensor device according to an embodiment of the disclosure where four unitary light sensors are used. In this setup, the multi directional light sensor device 300 comprises four unitary light sensors 301, 302, 303, 304, arranged in a configuration where their respective axis are separated from 90°and each unitary light sensor has a reception angle of around 90°, so that each unitary sensor covers approximately one fourth of the overall directions corresponding respectively to the areas A, B, C, D. The unitary light sensors are conventionally comprising at least light dependent resistors, appropriate electronic components and circuitry to convert physical light information into digital values. An optical lens placed over the sensors may be used to adapt the angle of capture covered by the sensors. Such a device can have various shapes and can be positioned by the user at a given place in the room.

**Figure 3B** illustrates an exemplary setup of a light bulb integrating a multi directional light sensor using four unitary light sensors according to an embodiment of the disclosure. In this exemplary setup, the light bulb 310 has the form of an octagon, four unitary light sensors 311, 312, 313, 314 are positioned on four sides of the light bulb 310 and four light emitting diodes 321, 322, 323, 324 are positioned on the four other sides, sensors and diodes being arranged alternately so that the light emission of the diodes has minimal impact on the measure of incoming light by the sensors.

**Figure 3C** illustrates an exemplary setup of a screen device integrating a multi directional light sensor using four unitary light sensors according to an embodiment of the disclosure. A television, a computer screen, a wall-mounted tablet, or a home network control touch interface are examples of screen devices. The figure shows a top view of a television 350, the front of the television being represented by the upper part. In this setup, three unitary light sensors are used to measure light from the sides of the television (unitary sensor 352 for the left side of the television with regards to a viewer position in front of the television and unitary sensor 354 for the right side) and from the rear of the television (unitary sensor 353). The front sensor 351 uses a camera sensor built-in the television and that may have other usages such as capturing image of the users during a video conferencing session. Appropriate image analysis algorithms are used to determine the direction and intensity of incoming light beams towards the camera sensor. Such setup is less intrusive than a standalone dedicated device. Moreover, the overall process is simplified since the sensors have fixed positions towards the television, and therefore detecting the relative position of the television towards the light control device 100 (step 401 of flowchart of figure 4B) is immediate since it is fixed.

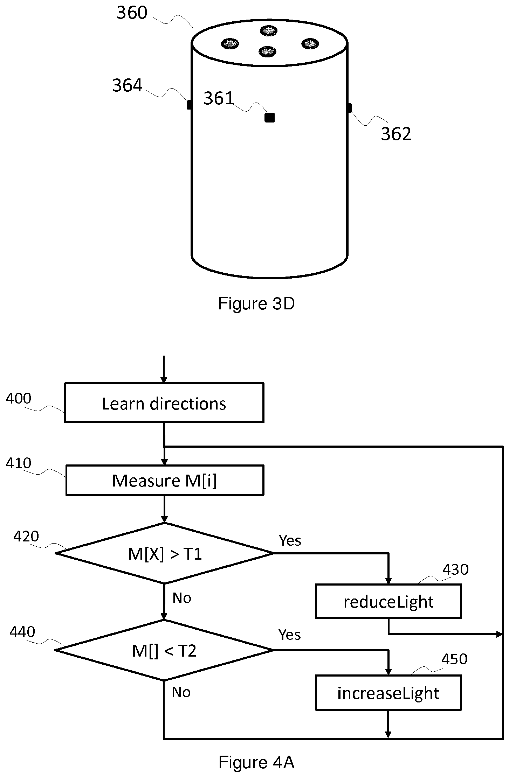

Figure 3D illustrates an exemplary setup of a voice controlled home assistant device integrating a multi directional light sensor using four unitary light sensors according to an embodiment of the disclosure. Amazon Echo, Apple HomePod or Google Home are examples of voice controlled home assistant devices. In this exemplary setup, the voice controlled home assistant device 360 has a cylindric shape with the controls located on the upper side of the device and comprises four unitary light sensors 361, 362, 363 (not shown since being at the back of the device), 364 positioned on four sides of the device 360. Voice controlled home assistant devices are particularly adapted to integrate a light control device since they are generally positioned at strategic places (near the user, beside the sofa, in front of the television), already integrate a processor and communication interfaces, and potentially comprise a home automation interface.

**Figure 4A** represents a sequence diagram describing steps to implement a method of the disclosure for controlling the lighting conditions in a room. This method will be illustrated in the context of the exemplary room described in figure 2, in which the light control device is integrated to a light bulb as illustrated in figure 3B. The unitary sensors 311, 312, 313, 314 of figure 3B respectively measure the light coming from the North, East, South and West directions. In this example, the adjustable elements that impact the lighting conditions of the room are composed of the two lamps 151, 152 and the two shutters 161, 162.

In step 400, the directions of the screen and of the adjustable elements are learned. This step is further detailed in the description of Figure 4B. The processor generates an impact table determining, for each adjustable element, an impact value representing the impact of the adjustable element on the lighting conditions for each one of the plurality of directions. The impact table is related to both the shutters and the lamps. The processor also determines the sensor associated to the direction opposite to the screen, as explained below in the description of step 431. This direction noted *oppoDir* is assigned a value of 4 in the example.

In step 410, the light is measured on all sensors. A table *M[i]* represents the light intensity measurements performed by each of the sensors in each direction *i*, for example *M[1]* for sensor 311, $M$[2]for sensor 312, *M[3]* for sensor 313 and *M[4]* for sensor 314.

In step 420, the processor 110 compares the light measurement of sensor identified by *oppoDir,* i.e. *M[4]* corresponding to the sensor 314 in the example, to a first threshold, T1. If the measure is higher than the threshold, then it is considered that too much light is arriving onto the screen and the lighting conditions needs to be reduced by controlling the adjustable elements in step 430, as described in figure 4B, for example closing shutter or turning a light off.

In step 440, the light measurement of each sensor is compared with a second threshold. In one embodiment, the values of all sensors are averaged. In another embodiment, the values of the sensor or sensors in direction of the screen have a higher weighting than the values from the lateral sensors, which in turn have a higher weighting than the values from the sensor in the opposite direction. If the measure is lower than the second threshold, T2, then it is considered that the room lighting is too dark and the lighting needs to be increased by controlling the adjustable elements in step 430, as described in figure 4C, for example turning a light on or opening a shutter.

The steps 410 to 450 are iterated continuously to enable satisfying lighting conditions in the room. The first and second thresholds may be determined as absolute values but can also be determined relatively according to the overall lighting measurements.

**Figure 4B** represents a sequence diagram describing steps to implement a method of the disclosure for learning the directions of the screen and adjustable elements of the room. Indeed, when starting up for the first time, the light control device 100 has no information of his spatial position regarding the screen, nor regarding the adjustable elements that impact the lighting conditions of the room, comprising here the lamps and shutters. These steps are triggered automatically when the system is started for the first time and manually by the user in case of any change regarding the equipment of the room (moving the screen, adding a new lamp, etc).

In one embodiment, the learning operation is performed as an intrusive operation comprising a first step of closing all shutters and turning off all lamps, therefore putting the room into the dark. The steps 401, 402, 403, are then performed to learn the directions of the screen and adjustable elements of the room. After this learning phase, the lighting conditions are restored according to the previous state. In such embodiment, the environment is well controlled so that the direction impacted by an adjustable element is easy to determine since the other elements do not impact the lighting conditions. In another embodiment, the learning operation is performed in a less intrusive operation that does not put the room completely in the dark and acts on a single adjustable element at a time. With such technique, the impact of one adjustable element is less visible since the light sensors are impacted also by the overall lighting and therefore by the other adjustable elements. The example below uses the intrusive technique.

In step 401, the direction of the screen 210 is detected. As a prerequisite, the screen 210 must be powered on and an image or preferably a video sequence comprising animated images with subsequent variations of light intensity is displayed. In one embodiment, the user is asked to power on the screen 210 and to select a program or input providing animated images. In an alternate embodiment, the screen 210 can be remote controlled and is waken up when it is in standby mode. This can be done for example by using the High-Definition Multimedia Interface Consumer Electronics Control (HDMI CEC) commands. A test video test is preferably displayed. Such video includes a pre-determined pattern that is easy to detect using the light sensors, such as a blinking effect between a white and a black screen at a pre-determined rate. To detect the screen direction, the processor 110 accumulates measures of the intensity of incoming light on each unitary sensor over a period of time, say a few seconds. A table $M[i]$ represents the light intensity measurements performed by each of the sensors in each direction $i$, for example $M[1]$ for sensor 311, $M[2]$ for sensor 312, $M[3]$ for sensor 313 and $M[4]$ for sensor 314. The processor 110 performs successive measurements, leading for example to the values of Table 1, measured for each sensor in lux, for a series of 10 measurements taken each second:

Table 1

| Measure | M[1] | M[2] | M[3] | M[4] |
|---|---|---|---|---|
| 1 | 9 | 75 | 11 | 5 |
| 2 | 18 | 150 | 22 | 10 |
| 3 | 54 | 450 | 66 | 30 |
| ... | | | | |
| 10 | 9 | 75 | 11 | 5 |

The processor then determines the variations of the light signal for each sensor, for example by taking the distance between the minimal and maximal value. If no variation is detected or if the variations are insignificant, further measures are performed until sufficient variations are detected. The processor determines values for each direction proportionally to the measures performed. For examples, with the values of Table 1, the processor first computes the variations for each sensor (respectively 45, 375, 55 and 25) and divides theses values by the cumulated variations (45+375+55+25=500) to determine for each sensor a proportional impact as a percentage of the cumulated variations (respectively 45/500, 375/500, 55/500 and 25/500), therefore leading to the Table 2 that represents the impact of the light coming from the screen for each of the four unitary sensor, and therefore for each of the corresponding direction (in percentage):

Table 2

| sensor | 1 | 2 | 3 | 4 |
|--------|---|---|---|---|
| SCREEN | 9 | 75 | 11 | 5 |

From this table, the processor determines the direction of the screen as corresponding to the sensor with highest value.

In step 402, the directions impacted by the shutters are learned and an association table S[ ] is generated, indicating for each shutter S[i] of the room its impact on each of the sensors and corresponding direction. The list of shutters is first obtained through the home automation interface 130. In the example of figure 1 using the light sensor of figure 3B, there are two shutters and four unitary light sensors. The size of the shutter table is two, with S[1] corresponding to the west shutter 161 in figure 1 and S[2] to the north shutter 162 in figure 1. For each shutter, the multidirectional light sensor (120) measures the intensity of incoming light in each of the directions firstly with the shutter open and secondly after having completely closed the shutter. An example of measure is illustrated in Table 3, measured for each sensor in lux.

Table 3

| Measures | M[1] | M[2] | M[3] | M[4] |
|----------|------|------|------|------|
| S[1] open | 150 | 250 | 100 | 500 |
| S[1] closed | 10 | 10 | 10 | 10 |
| S[2] open | 450 | 100 | 250 | 200 |
| S[2] closed | 10 | 10 | 10 | 10 |

The processor determines the difference between both values, for each unitary light sensor, and computes for each sensor a percentage of the cumulated differences similarly to the previous percentage computation of step 401, representing the proportional impact of each shutter for each direction as illustrated in Table 4.

Table 4

| sensor | 1 | 2 | 3 | 4 |
|--------|---|---|---|---|
| S[1] | 15 | 25 | 9 | 51 |
| S[2] | 46 | 9 | 25 | 20 |

In step 403, the directions impacted by the lamps are learned and an association table L[ ] is generated, indicating for each lamp L[i] of the room its impact on each of the sensors and corresponding direction. The process is very similar to the process used for the shutters, except that the lamps are turned on and off. It results in the table 5 that represent the proportional impact of each lamp for each direction.

Table 5

| sensor | 1 | 2 | 3 | 4 |
|--------|---|---|---|---|
| L[1] | 30 | 55 | 10 | 5 |
| L[2] | 15 | 10 | 25 | 50 |

The processor preferably concatenates the tables together into a unique table, named the impact table illustrated in table 6 and preferably stored in memory 140. This table will form the basis for the decision further taken during the adjustment of the lighting conditions.

Table 6

| sensor | 1 | 2 | 3 | 4 |
|--------|---|---|---|---|
| SCREEN | 9 | 75 | 11 | 5 |
| S[1] | 15 | 25 | 9 | 51 |

(continued)

| sensor | 1 | 2 | 3 | 4 |
|---|---|---|---|---|
| S[2] | 46 | 9 | 25 | 20 |
| L[1] | 30 | 55 | 10 | 5 |
| L[2] | 15 | 10 | 25 | 50 |

**Figure 4C** represents a sequence diagram describing steps to implement a method to reduce the lighting conditions in a room by adjusting at least one adjustable element.

In step 431, the best candidate for adjustment is chosen. The choice is done according to the impact table and to the current setting of the adjustable elements. It has to be decided if a light must be dimmed or a shutter closed. In one embodiment, the processor first determines the direction opposite to the screen, for example using the following formula:

$$oppoDir = (((screenDir - 1) + (nbSensors / 2)) \; modulo \; nbSensors) + 1$$

with *screenDir* being the number of the light sensor in direction of the screen in Table 6 as determined in step 401, and *nbSensors* being the total number of light sensors. In the above mentioned example, the screen direction has been detected as corresponding to sensor 302 in figure 3B that is represented by the colon 2 and therefore the value oppoDir is *oppoDir = (((2-1) + (4/2)) modulo 4) + 1 = 4*. This corresponds to the colon 4 of table 6 and sensor 304 in figure 3B.

Therefore the fourth colon of the impact table is analysed. The processor selects the element with the biggest impact form this colon as being the element to be adjusted. In the example of impact table above, the biggest impact is related to the first shutter 161, as can be seen in figure 2. Therefore this shutter is selected. In the case where the adjustable element with biggest impact cannot be operated anymore (e.g. the select shutter is closed or the selected light is turned off), the element with the next biggest value in the impact table is chosen. For more complex situations, some arbitrary priorities may be defined to help to take one decision.

In step 433, the selected shutter is then closed. Closing the shutter is preferably done in multiple lowering steps allowing to make small variations before iterating the measurements step 410 again, each step corresponding to a fraction of the total shutter range, for example 10% of the total shutter range, or to a distance of shutter movement, for example 20 centimetres or to a duration of shutter movement, for example 3 seconds. This is done for example by sending the appropriate commands through the home automation interface 130 to lower the shutter. The same principle apply to the lamps that are dimmed progressively, in step 435 when a lamp is selected.

Several heuristics can be defined for the selection step 431 of the element to be adjusted. In one embodiment, the state of each of the adjustable elements is taken into account. If the shutter are nearly closed but lamps are still turned on, then the lamp could be selected to be dimmed before closing the shutter completely. In another embodiment, the adjustable element with biggest impact on the direction opposite toward the direction of the screen is selected. In another embodiment, the adjustable element with biggest impact and adjustable elements with secondary impacts but whose impact is greater than a threshold are selected alternatively for the adjustments. In another embodiment, multiple tentative of adjustments are performed on different adjustable elements among the elements with highest impacts, the real impact of the adjustments are measured and finally the element providing the best result is chosen.

**Figure 4D** represents a sequence diagram describing steps to implement a method to increase the lighting conditions in a room by adjusting at least one adjustable element. In step 451, the best candidate for adjustment is chosen, according to heuristics that are similar to those used for reducing the lighting conditions. In step 435, the selected shutter is opened. In step 455, the intensity of the selected lamp is increased. Both adjustments are performed using small variations before iterating the measurements step 410 again. The small adjustments allow for smooth variations.

In a particular embodiment the screen 210 is a television and the methods described here above are implemented in an application running on the television, the application being either provided by the television manufacturer or downloaded by the user from an "app store".

One advantage of the device described in this disclosure is that it permits to adapt automatically the room lighting conditions to directional lighting perturbations such as a sun beam entering a window, without requiring the installation of sensors all over the room, on each wall, which is costly and brings some constraints on the interior.

Although the disclosure describes an automatic learning process for the screen direction, shutter impact and lamp impact, the person skilled in the art will appreciate that some parts of the learning process could also be done by a manual configuration phase or interactive setup where the directions are provided by the user, for example by placing the different elements (screen, shutter, lamp) on a map of the room that is displayed to the user.

**Claims**

1. A device (100) for controlling lighting conditions of a room, the room comprising a screen to display an image and at least one adjustable element (161, 162, 151, 152) whose adjustment impacts the lighting conditions of the room, the device comprising:

   - a multidirectional light sensor (120) comprising a plurality of light sensors arranged in order that each light sensor measures a light intensity from a direction among a plurality of directions;
   - a network interface (130) adapted to control lighting conditions of the room by sending commands to the at least one adjustable element; and
   - a memory (140) configured to store at least an impact table determining, for each adjustable element, an impact value representing the impact of the adjustable element on the lighting conditions for each one of the plurality of directions;
   - a processor (110) configured to:

      - obtain a direction of the screen;
      - obtain light intensity measurements in a plurality of directions;
      - when the light intensity measured in a direction opposite to the direction towards the screen meets a criterion:

         - select an adjustable element to be adjusted, based on the lighting conditions in a plurality of directions and on the impact table; and
         - reduce the lighting conditions of the room by sending a command to adjust the selected adjustable element.

2. The device of claim 1 wherein the criterion is met when the light intensity measured in a direction opposite to the direction towards the screen is higher than a threshold.

3. The device of claim 2 wherein the processor is further configured to generate the impact table by learning the direction of the screen and the impact of at least one adjustable element on at least one direction.

4. The device of claim 3 wherein the processor is further configured to learn the direction of the screen by performing successive light measurements from the plurality of directions while the screen displays animated images, determine for each direction the difference between minimal and maximal values measured and select the direction with highest difference as being the direction of the screen.

5. The device of claim 3 wherein the processor is further configured to learn the direction of at least one adjustable element by performing a first light measurement from the plurality of directions with the at least one adjustable element in a first position and a second measurement from the plurality of directions with the at least one adjustable element in a second position, determine for each direction the difference between both measures, determine for each direction the percentage of the cumulated differences and store the value in the impact table.

6. The device of claim 1, wherein when the average value of light is lower than a second threshold, the processor is further configured to select an adjustable element to be adjusted based on the impact table and the lighting conditions and to increase the lighting conditions of the room by sending at least a command to the selected adjustable element.

7. The device of claim 1 being a light bulb.

8. The device of claim 1 being a voice controlled home-assistant device.

9. The device of claim 1 being a screen.

10. The device of claim 9 wherein one of the light sensor is realized by a camera integrated in the screen, the camera capturing images that are analysed by image processing algorithms to determine the lighting measurements.

11. A method for controlling lighting conditions of a room, the room comprising a screen to display an image and at least one adjustable element whose adjustment impacts the lighting conditions of the room, the method comprising:

- obtaining (401) a direction of the screen;
- measuring (410) light intensity in a plurality of directions;
- when the light measured in the direction opposite to the direction towards the screen is higher (420) than a first threshold:

    - selecting (431) an adjustable element to be adjusted, based on the lighting conditions and an impact table determining, for each adjustable element, an impact value representing the impact of the adjustable element on the lighting conditions for each one of the plurality of directions; and
    - reduce (430) the lighting conditions of the room by sending (433, 435) a command to adjust the selected adjustable element.

12. The method of claim 11 wherein the impact table is generated by learning the direction of the screen and the impact of at least one adjustable element on at least one direction.

13. The method of claim 10 wherein the direction of the screen is learnt (401) by performing successive light measurements from the plurality of directions while the screen displays animated images, determine for each direction the difference between minimal and maximal values measured and select the direction with highest difference as being the direction of the screen.

14. Computer program comprising program code instructions executable by a processor (110) for implementing the steps of a method according to at least one of claims 11 to 13.

15. Computer program product which is stored on a non-transitory computer readable medium (190) and comprises program code instructions executable by a processor (110) for implementing the steps of a method according to at least one of claims 11 to 13.

Figure 1

Figure 2

Area A

301

300

304

Area D

Area B

302

303

Area C

Figure 3A

311

324

321

310

314

312

323

322

313

Figure 3B

front

351

350

354

353

352

rear

Figure 3C

360

364

361

362

Figure 3D

400　Learn directions

410　Measure M[i]

420　M[X] > T1　　Yes

430　reduceLight

No

440　M[] < T2　　Yes

450　increaseLight

No

Figure 4A

Learn Screen direction — 401

Learn Shutter impact — 402

Learn Lamp impact — 403

Figure 4B

431 — Determine Best candidate

Light[i]

Shutter [i]

Dim light [i] — 435

Close shutter [i]

433

Figure 4C

451 — Determine Best candidate

Light[i]

Shutter [i]

Increase light [i] — 455

Open shutter [i]

453

Figure 4D

Europäisches
Patentamt

European
Patent Office

Office européen
des brevets

**EUROPEAN SEARCH REPORT**

Application Number

EP 17 20 2106

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | US 2015/089551 A1 (BRUHN CHRISTOPHER WILLIAM [US] ET AL) 26 March 2015 (2015-03-26) | 1-3, 6-12,14, 15 | INV. H05B37/02 |
| A | * paragraph [0030] - paragraph [0046]; figures 3-5 * ----- | 4,5,13 | ADD. G09G5/00 |
| X | US 2012/206050 A1 (SPERO YECHEZKAL EVAN [IL]) 16 August 2012 (2012-08-16) * paragraph [0250] - paragraph [0296]; figure 12 * ----- | 1,11,14, 15 | |

TECHNICAL FIELDS
SEARCHED      (IPC)

H05B
G09G

The present search report has been drawn up for all claims

| Place of search | Date of completion of the search | Examiner |
|---|---|---|
| Munich | 4 April 2018 | Beaugrand, Francois |

CATEGORY OF CITED DOCUMENTS

X : particularly relevant if taken alone
Y : particularly relevant if combined with another
    document of the same category
A : technological background
O : non-written disclosure
P : intermediate document

T : theory or principle underlying the invention
E : earlier patent document, but published on, or
    after the filing date
D : document cited in the application
L : document cited for other reasons

& : member of the same patent family, corresponding
    document

EPO FORM 1503 03.82 (P04C01)

## ANNEX TO THE EUROPEAN SEARCH REPORT
## ON EUROPEAN PATENT APPLICATION NO.

EP 17 20 2106

This annex lists the patent family members relating to the patent documents cited in the above-mentioned European search report.
The members are as contained in the European Patent Office EDP file on
The European Patent Office is in no way liable for these particulars which are merely given for the purpose of information.

04-04-2018

| Patent document cited in search report | Publication date | Patent family member(s) | Publication date |
|---|---|---|---|
| US 2015089551 A1 | 26-03-2015 | EP 2851894 A1<br>US 2015089551 A1 | 25-03-2015<br>26-03-2015 |
| US 2012206050 A1 | 16-08-2012 | US 2012206050 A1<br>US 2015035440 A1 | 16-08-2012<br>05-02-2015 |

EPO FORM P0459

For more details about this annex : see Official Journal of the European Patent Office, No. 12/82